# EUROPÄISCHE PATENTSCHRIFT

(11) **EP 3 395 455 B1**
(45) Veröffentlichungstag und Bekanntmachung des Hinweises auf die Patenterteilung: **08.04.2020**
(21) Anmeldenummer: 17168267.7
(22) Anmeldetag: 26.04.2017
(51) Int. Cl.: B09B 1/00, C04B 28/02, E02D 5/18, E02D 31/00

(54) **DICHTWANDBAUSTOFF UND VERFAHREN ZUR HERSTELLUNG EINES DICHTWANDBAUSTOFFS**
SEALING WALL MATERIAL AND METHOD FOR PRODUCING SAME
MATÉRIAU DE PAROI SOUPLE ÉTANCHE ET SON PROCÉDÉ DE FABRICATION

(43) Veröffentlichungstag der Anmeldung: 31.10.2018
(73) Patentinhaber: BAUER Spezialtiefbau GmbH, 86529 Schrobenhausen (DE)
(72) Erfinder: IBUK, Hursit, 86163 Augsburg (DE)
(74) Vertreter: Wunderlich & Heim Patentanwälte Partnerschaftsgesellschaft mbB

(56) Entgegenhaltungen:
- DE-A1- 4 332 644
- DE-A1- 4 407 329
- DE-A1- 19 912 652
- CHUNLIANG ZHANG ET AL: "EIGENSCHAFTEN VON FLUGASCHE-FLOTATIONS-BERGE-ZEMENT-GEMISCHE N FUER VERFUELL- UND VERSATZ-ZWECKE IM BERGBAU", GLUCKAUF-FORSCHUNGSHEFTE, VERLAG GLUCKAUF. ESSEN, DE, Bd. 52, Nr. 6, 1. Dezember 1991 (1991-12-01), Seiten 292-296, XP000236827, ISSN: 0017-1387
- Herbert Gräf ET AL: "Verfahren zur Prüfung der Durchlässigkeit von Mörtel und Beton gegenüber Gasen und Wasser", Betontechnischer Bericht 86-88, 31 January 1986 (1986-01-31), pages 35-56, XP055565252, Retrieved from the Internet: URL:https://www.vdz-online.de/fileadmin/gr uppen/vdz/3LiteraturRecherche/Fachaufsaetz e/1981_1990/Betontechnischer_Bericht_86-88 _Verfahren_zur_Pruefung_der_Durchlaessigke it_von_Moertel_und_Beton_gegenueber_Gasen_ und_Wasser.pdf [retrieved on 2019-03-06]

## Beschreibung

Die Erfindung betrifft einen Dichtwandelement gemäß dem Oberbegriff des Anspruchs 1.

Die Erfindung betrifft weiterhin ein Verfahren zum Herstellen eines Dichtwandelementes gemäß dem Anspruch 6.

Aus der EP 0 483 884 A2 ist eine Dichtmasse für die Abdichtung von Böden und Wänden von Müll- und Abfalldeponien mit verstärkt aggressiver Sickerflüssigkeit oder als Auskleidung von Auffang-Wannen oder Behälter für hochaggressive Flüssigkeiten bekannt. Hierfür ist die Verwendung einer Gemischkombination aus einem Tonmehlanteil von etwa 15 Gew.%, einem Mineral- oder Gesteinsmehlanteil von etwa 85% sowie einem Anteil eines porendichtenden Hydrogels bekannt.

Ein gattungsgemäßer Dichtwandbaustoff geht aus der AT 393 381 B hervor. Das hierin beschriebene Bindemittelgemisch, welches beispielsweise für Dichtwände vorgesehen ist, besteht aus Zement und weiteren Zusätzen. Zum Erreichen der geforderten Dichtigkeit ist mindestens ein quellfähiges Tonmineral vorgesehen.

Derartige Dichtwandmassen werden insbesondere zur Herstellung sogenannter Schlitz- oder Dichtwände eingesetzt, welche zur Grundwasserabsperrung etwa von Deponien oder sonstigen Altlasten verwendet werden. Gegenüber herkömmlichen Betonmassen ist dabei eine hohe Dichtigkeit oder ein entsprechend geringer Durchlässigkeitsbeiwert gewünscht, um eine entsprechende Sperrwirkung sicherzustellen. Gleichzeitig wird eine reduzierte Festigkeit und eine gewisse Plastizität des Dichtwandbaustoffs gewünscht, so dass im Falle von Setzungen weiterhin eine hohe Dichtwirkung und eine gewisse Anpassbarkeit der Masse sichergestellt ist.

Zu diesem Zweck ist es bekannt, dem Baustoff ein quellfähiges oder vorgequollenes Tonmineral, etwa Montmorillonit oder Bentonit zuzusetzen. Derartige Zusätze aus Tonmineralien sorgen für eine hohe Dichtigkeit in der aushärtenden Betonmasse, wobei derartige Massen auch als Tonbetone bezeichnet werden, welche in der DIN EN 1538: 2015-10, Abschnitt 6.4 definiert sind.

Tonmineralien bedürfen aufgrund ihrer Quelleigenschaft mit Wasser einer besonderen Verarbeitung. Üblicherweise ist es erforderlich, die Bindemittelmischung mit dem Zement und den Gesteinskörnungen getrennt zuzubereiten und anschließend das vorgequellte Tonmineral in einem abschließenden Verfahrensschritt mit einem separaten Mischer zu der Dichtwandmasse fertig zu verarbeiten.

Aus der WO 94/22783 A1 geht eine verformbare Deponiemasse hervor, die aus verschiedenen Komponenten zusammengesetzt ist, wobei ebenfalls ein quellfähiges Tonmineral mit einem Gewichtsanteil von 2% bis 15% vorgesehen ist.

Aus der DE 199 12 652 A1 ist ein Verfahren zur Herstellung eines säurebeständigen Betons bekannt. Dabei wird als Bindemittel ein Gemisch aus 60 bis 80 Gew.-% Zement, 15 bis 25 Gew.-% Flugasche und 5 bis 15 Gew.-% Mikrosilika eingesetzt.

Die DE 44 07 329 A1 beschreibt ein Verfahren zur Herstellung eines Mehrkomponenten-Stoffgemisches, welches 284 kg Braunkohlefilterasche, 32 kg Steinkohlefilterasche, 15 kg Portlandzement, 650 kg Kiessand und 80 kg Stahlfasern aufweist. Der Fachartikel von Chunliang Zhang et al. "Eigenschaften von Flugasche-Flotationsberge-Zement-Gemischen für Verfüll- und Versatzzwecke im Bergbau", Glückauf-Forschungshefte, Verlag Glückauf, Essen, Bd. 52, Nr. 6, Dezember 1991, befasst sich mit den Einflüssen des Zementgehalts und des Flotationsbergegehalts auf den die Dichtheit betreffenden Durchlässigkeitsbeiwert kf der hergestellten Gefüge. Die verwendeten Flotationsberge enthalten dabei ein quellfähiges Tonmineral.

DE4332644A1 zeigt wasserdichtes Baumaterial.

Der Erfindung liegt die **Aufgabe** zugrunde, ein Dichtwandelement und ein Verfahren zu dessen Herstellung anzugeben, wobei das Dichtwandelement bei guter Dichtungseigenschaft besonders einfach und effizient herzustellen ist.

Die Aufgabe wird nach der Erfindung zum einen durch ein Dichtwandelement mit den Merkmalen des Anspruchs 1 und zum anderen durch ein Verfahren mit den Merkmalen des Anspruchs 6 gelöst. Bevorzugte Ausführungsformen sind in den abhängigen Ansprüchen angegeben.

Bei dem erfindungsgemäßen Dichtwandelement ist vorgesehen, dass das Bindemittel eine Mischung aus Zement und Flugasche umfasst, wobei es frei von Tonmineral ist, und eine Dichtigkeit mit einem kf-Wert von 10⁻⁷ m/s und kleiner aufweist.

Ein Aspekt der Erfindung besteht darin, bei der Herstellung des Bindemittels auf ein nur schwer zu verarbeitendes quellfähiges oder vorgequollenes Tonmineral zu verzichten und für das Bindemittel eine Mischung aus Zement und Flugasche vorzuse hen. Dabei sind das Bindemittel und die Masse insgesamt so eingestellt, dass eine Dichtigkeit mit einem kf-Wert von 10⁻⁷ m/s und kleiner gegeben ist.

Die Erfindung beruht auf der Erkenntnis, dass für eine Dichtwandmasse mit guter Dichteigenschaft die Verwendung von Tonmineral nicht zwingend erforderlich ist, sondern diese durch Flugasche erfindungsgemäß ersetzt werden kann. Dabei ist Flugasche der feste, disperse (teilchenförmige, partikelförmige oder staubförmige) Rückstand von Verbrennungen, der aufgrund seiner hohen Dispersität mit den Rauchgasen ausgetragen wird. Die Partikelgröße reicht dabei von etwa 1 µm bis 1 mm. Flugasche entsteht in großen Mengen in Verbrennungskraftwerken oder in Müllverbrennungsanlagen, wobei die Flugasche durch entsprechende Filteranlagen aus den Rauchgasen abgeschieden wird. Flugasche eignet sich somit von seiner Dispersität zur Erhöhung der Dichtwirkung und steht auch kostengünstig in ausreichenden Mengen zur Verfügung.

Nach der Erfindung ist vorgesehen, dass die Gesteinskörnung Sand und/oder Grobkorn umfasst. Dabei kann Sand 0/2 mit einem Gewichtsanteil von 400 bis 1000 kg/m³ und eine Gesteinskörnung 2/8 von 400 bis 800 kg/m³ vorgesehen sein. Je nach Rezeptur können auch andere Gesteinskörnungsmischungen vorgesehen werden.

Weiterhin ist es erfindungsgemäß, dass ein Gehalt an Bindemittel von zumindest 400kg/m³ Beton vorgesehen ist. Dabei kann das Bindemittel einen Gehalt an Zement von vorzugsweise mindestens 75 kg/m³ und Flugasche von zumindest 250 kg/m³ aufweisen. Besonders bevorzugt ist, wenn pro Kubikmeter Beton Bindemittel vorgesehen ist, welches einen Anteil von Zement von 100 kg/m³ und von Flugasche in einer Menge von 300 bis 350 kg/m³ Dichtwandmasse vorgesehen ist.

Ein besonders gutes Verhältnis von Dichtigkeit zu Festigkeit wird nach einer Weiterbildung der Erfindung dadurch erzielt, dass das Bindemittel ein Verhältnis von Zement zu Flugasche zwischen 2% und 60% aufweist. Es sind also beispielsweise zwei Teile Zement zu 98 Teilen Flugasche beziehungsweise 40 Teile Zement zu 60 Teilen Flugasche vorgesehen. Der Rest der Rezeptur kann aus Gesteinskörnung, Zusatz mitteln sowie Wasser bestehen. Dabei ist der Wassergehalt deutlich höher als bei konstruktiven Betonen.

Eine weitere Verbesserung des erfindungsgemäßen Dichtwandelementes kann dadurch erzielt werden, dass mindestens ein Zusatzmittel, insbesondere ein Fließmittel und/oder ein Verzögerer, vorgesehen ist. Mit einem Fließmittel kann die Fließfähigkeit der rohen Dichtwandmasse in gewünschter Weise beeinflusst und eingestellt werden. Mit einem sogenannten Verzögerer kann das Abbindeverhalten der Dichtwandmasse beeinflusst und eingestellt werden. Insbesondere kann so eine Abbindezeit verlängert werden, so dass für den Transport und die Verarbeitung des Dichtwandbaustoffs ausreichend Zeit verbleibt.

Weiterhin hat es sich als besonders vorteilhaft herausgestellt, wenn die frische Masse eine Rohdichte zwischen 2,0 g/cm³ und 2,4 g/cm³ aufweist. Unter frische Masse ist dabei der fertiggestellte Dichtwandbaustoff in seinem noch fließfähigen, nicht ausgehärteten Zustand zu verstehen. Hinsichtlich der Fließfähigkeit ist es bevorzugt, dass ein Ausbreitmaß a zwischen 57 cm und 63 cm beträgt, wobei das Ausbreitmaß nach DIN EN 206: 2014-07 zu messen ist.

Bei einer Weiterbildung des erfindungsgemäßen Dichtwandelementes ist es weiterhin bevorzugt, dass eine einaxiale Druckfestigkeit qᵤ bei einem Alter von 7 Tagen von qᵤ ≤ 500 kN/m² und bei einem Alter von 28 Tagen von 1000 kN/m² ≤ qᵤ ≤ 5000 kN/m² vorgesehen ist. In diesem Wertebereich ist der Dichtwandbaustoff hinreichend stabil, weist aber gleichzeitig noch eine gewisse Anpassbarkeit, etwa auf Formveränderungen und Setzungen, auf, so dass eine hieraus hergestellte Dichtwand hinreichend stabil ist.

Weiterhin betrifft die Erfindung eine Dichtwand mit einem Dichtwandelement, welches mit einem Dichtwandbaustoff hergestellt ist, welcher zuvor beschrieben wurde. Eine derartige Dichtwand oder ein derartiges Dichtwandelement, welches beispielsweise auch eine Bodenplatte sein kann, ist einfach und kostengünstig herstellbar, wobei gleichzeitig eine gute Dichtigkeit und Festigkeit gegeben sind.

Weiterhin betrifft die Erfindung ein Verfahren zum Herstellen eines Dichtwandelementes, bei dem in einem einzigen Mischer ein Bindemittel mit Zement und Gesteinskörnungen unter Zugabe von Wasser zu dem Dichtwandbaustoff vermischt wird, wobei das Bindemittel eine Mischung aus Zement und Flugasche umfasst und der Dichtwandbaustoff frei von einem Tonmaterial gehalten ist, und wobei eine Dichtigkeit mit einem kf-Wert von 10⁻⁷ m/s und kleiner eingestellt wird.

Mit dem erfindungsgemäßen Verfahren kann das zuvor beschriebene Dichtwandelement in einfacher und effizienter Weise hergestellt werden.

Vorzugsweise liegt die Dichtigkeit eines erfindungsgemäßen Dichtwandelementes im Bereich eines kf-Wertes von 10⁻¹⁰ m/s und geringer.

## Patentansprüche

1. Dichtwandelement, welches mit einem Dichtwandbaustoff hergestellt ist, welcher ein Bindemittel mit Zement und Gesteinskörnungen aufweist,
welche Sand mit einer Körnung 0/2 mit einem Gewichtsanteil von 400 bis 1.000 kg/m³ und ein Grobkorn mit einer Gesteinskörnung 2/8 mit einem Gewichtsanteil von 400 bis 800 kg/m³ umfasst, und wobei ein Gehalt an Bindemittel von zumindest 400 kg/m³ vorgesehen ist,
**dadurch gekennzeichnet,**
**dass** das Bindemittel eine Mischung aus Zement und Flugasche umfasst, wobei es frei von Tonmaterial ist, und
**dass** der Dichtwandbaustoff eine Dichtigkeit mit einem kf-Wert von 10⁻⁷ m/s und kleiner aufweist und
**dass** das Bindemittel ein Verhältnis von Zement zu Flugasche zwischen 2% und 60% aufweist.

2. Dichtwandelement nach Anspruch 1,
**dadurch gekennzeichnet,**
**dass** mindestens ein Zusatzmittel, insbesondere ein Fließmittel und/oder ein Verzögerer, vorgesehen ist.

3. Dichtwandelement nach einem der Ansprüche 1 oder 2,
**dadurch gekennzeichnet,**
**dass** die frische Masse des Dichtwandbaustoffs eine Rohdichte zwischen 2,0 g/cm³ und 2,4 g/cm³ aufweist.

4. Dichtwandelement nach einem der Ansprüche 1 bis 3,
**dadurch gekennzeichnet,**
**dass** eine einaxiale Druckfestigkeit qᵤ bei einem Alter von 7 Tagen von qᵤ ≥ 500 kN/m² und bei einem Alter von 28 Tagen von 1000 kN ≤ qᵤ ≤ 5000 kN/m² vorgesehen ist.

5. Dichtwand mit einem Dichtwandelement nach einem der Ansprüche 1 bis 4 hergestellt ist.

6. Verfahren zum Herstellen eines Dichtwandelementes nach einem der Ansprüche 1 bis 4,
wobei in einem einzigen Mischer Bindemittel mit Zement und Gesteinskörnungen unter Zugabe von Wasser zu dem Dichtwandbaustoff für das Dichtwandelement vermischt werden.

## Claims

1. Sealing wall element, which is produced with a sealing wall building material, which has a binding agent with cement and aggregates,
which comprises sand with a graining 0/2 with a weight proportion of 400 to 1,000 kg/m³ and a coarse aggregate with an aggregate 2/8 with a weight proportion of 400 to 800 kg/m³ and in which a content of binding agent of at least 400 kg/m³ is provided.
**characterized in that**
the binding agent comprises a mixture of cement and fly ash, wherein it is free of clay material, and
the sealing wall building material has an impermeability with a kf value of 10⁻⁷ m/s and less and
the binding agent has a ratio of cement to fly ash of between 2% and 60%.

2. Sealing wall element according to claim 1,
**characterized in that**
at least one additive, in particular a flow agent and/or a retarder, is provided.

3. Sealing wall element according to any one of claims 1 or 2,
**characterized in that**
the fresh mass of the sealing wall building material has a bulk density of between 2.0 g/cm³ and 2.4 g/cm³.

4. Sealing wall element according to any one of claims 1 to 3,
**characterized in that**
a monoaxial compressive strength qᵤ of qᵤ ≥ 500 kN/m² is provided at an age of 7 days and of 1000 kN ≤ qᵤ ≤ 5000 kN/m² at an age of 28 days.

5. Sealing wall with a sealing wall element, which is manufactured according to any one of claims 1 to 4.

6. Method for manufacturing a sealing wall element according to any one of claims 1 to 4,
in which a binding agent is mixed with cement and aggregates in a single mixer with the addition of water to form the sealing wall building material for the sealing wall element.

## Revendications

1. Élément de paroi étanche, lequel est fabriqué avec un matériau de paroi étanche, lequel présente un liant avec du ciment et des granulats,
lequel comprend du sable avec une granulométrie de 0/2 avec une proportion en poids de 400 à 1000 kg/m³ et des gros grains avec un granulat 2/8 avec une proportion en poids de 400 à 800 kg/m³, et dans lequel une teneur en liant d'au moins 400 kg/m³ est prévue,
**caractérisé en ce que**
le liant comprend un mélange composé de ciment et de cendres volatiles en étant exempt de matière argileuse, et
**en ce que** le matériau de paroi étanche présente une étanchéité avec un degré de perméabilité de 10⁻⁷ m/s et moins, et
**en ce que** le liant présente un rapport entre le ciment et les cendres volatiles entre 2 % et 60 %.

2. Élément de paroi étanche selon la revendication 1,
**caractérisé en ce que**
au moins un additif, en particulier un fluidifiant et/ou un retardateur, est prévu.

3. Élément de paroi étanche selon l'une des revendications 1 ou 2,
**caractérisé en ce que**
la masse fraîche du matériau de paroi étanche présente une masse volumique apparente entre 2,0 g/cm³ et 2,4 g/cm³.

4. Élément de paroi étanche selon l'une des revendications 1 à 3,
**caractérisé en ce que**
une résistance à la pression uniaxiale qᵤ ≥ 500 kN/m² est prévue pour une ancienneté de 7 jours et telle que 1000 kN ≤ qᵤ ≤ 5000 kN/m² pour une ancienneté de 28 jours.

5. Paroi étanche fabriquée avec un élément de paroi étanche selon l'une des revendications 1 à 4.

6. Procédé pour la fabrication d'un élément de paroi étanche selon l'une des revendications 1 à 4,
dans lequel des liants avec du ciment et des granulats sont mélangés en ajoutant de l'eau au matériau de paroi étanche pour réaliser l'élément de paroi étanche dans un unique mélangeur.
